# EUROPÄISCHE PATENTSCHRIFT

(11) **EP 3 746 356 B1**
(45) Veröffentlichungstag und Bekanntmachung des Hinweises auf die Patenterteilung: **19.07.2023**
(21) Anmeldenummer: 19702222.1
(22) Anmeldetag: 23.01.2019
(51) Int. Cl.: B62M 3/00

(54) **DREHMOMENTERFASSUNGSANORDNUNG FÜR EIN MIT MUSKELKRAFT ANGETRIEBENES FAHRZEUG**
TORQUE DETECTING DEVICE FOR A MUSCLE-POWERED VEHICLE
DISPOSITIF DE DETECTION DE COUPLE POUR VÉHICULE MUSCLÉ

(30) Priorität: 29.01.2018 DE 102018101911
(43) Veröffentlichungstag der Anmeldung: 09.12.2020
(73) Patentinhaber: Pinion GmbH, 73770 Denkendorf (DE)
(72) Erfinder: SCHMITZ, Michael, 72116 Mössingen (DE)
(74) Vertreter: Witte, Weller & Partner Patentanwälte mbB
(86) Internationale Anmeldenummer: PCT/EP2019/051666
(87) Internationale Veröffentlichungsnummer: WO 2019/145377

(56) Entgegenhaltungen:
- CN-A- 106 218 801
- DE-A1- 19 613 079
- DE-A1-102011 120 675
- DE-T2- 69 512 958

## Beschreibung

Die vorliegende Erfindung betrifft eine Drehmomenterfassungsanordnung für ein mit Muskelkraft angetriebenes Fahrzeug, mit einer Eingangswelle, über die ein zu erfassendes Drehmoment zum Antreiben des Fahrzeugs übertragbar ist, mit wenigstens einem Drehglied, insbesondere in Form eines Antriebsrades, das an der Eingangswelle gelagert ist und das zum Übertragen des Drehmomentes ausgebildet ist, beispielsweise auf ein angetriebenes Rad, mit einer Drehfederanordnung, wobei die Eingangswelle und das Drehglied über die Drehfederanordnung in Rotationsrichtung federnd verbunden sind, und mit einer Verdrehwinkelerfassungsanordnung, die dazu ausgebildet ist, eine Verdrehung des Drehgliedes gegenüber der Eingangswelle zu erfassen.

Ferner betrifft die vorliegende Erfindung eine Getriebeeinheit für ein mit Muskelkraft angetriebenes Fahrzeug, wobei die Getriebeeinheit eine Drehmomenterfassungsanordnung der oben beschriebenen Art beinhaltet.

Die oben angegebene Drehmomenterfassungsanordnung und die zugeordnete Getriebeeinheit sind bekannt aus dem Dokument DE 10 2011 120 675 A1.

Drehmomenterfassungsanordnungen der oben beschriebenen Art dienen dazu, ein Drehmoment, das durch Muskelkraft zum Antreiben eines Fahrzeugs bereitgestellt wird, zu erfassen.

Generell ist es bekannt, Fahrräder mit Hilfsmotoren auszurüsten, die beispielsweise als Nabenmotor im Bereich der Vorderrad- bzw. der Hinterradnabe angeordnet sein können. Hilfsmotoren können jedoch auch als Mittelmotor im Bereich eines Tretlagers eines Fahrrades angeordnet sein. Der Hilfsmotor kann als alleiniger Antrieb das Fahrrad antreiben, vorzugsweise stellt er jedoch ein Antriebsmoment bereit, das einen Antrieb durch Muskelkraft unterstützt.

Sofern das durch Muskelkraft bereitgestellte Antriebsmoment mittels des Hilfsmotors unterstützt werden soll, um den Antrieb des Fahrrades zu erleichtern, ist es sinnvoll, das durch Muskelkraft eingeleitete Drehmoment zu erfassen.

Das Dokument WO 99/030960 A1 offenbart einen Drehmomentsensor, der zusammen mit einem Elektromotor in einem Tretlager des Fahrzeugs integriert ist und der zwei bandförmige Magnetpole aufweist, die durch Torsion gegeneinander verschoben werden. Nachteilig hierbei ist es, dass der Aufbau und die Erfassung der Verdrehung mittels Induktionsspulen technisch aufwändig ist und dass der Sensor einen großen Bauraum innerhalb des Tretlagers erfordert.

Weiterhin ist es bekannt, einen Drehmomentsensor mittels einer mechanischen Feder zu realisieren, wobei zwei mittels einer Torsionsfeder federnd miteinander verbundene Elemente gegeneinander verdreht werden und wobei über den zu erfassenden Verdrehwinkel das eingeleitete Drehmoment erfasst werden kann. In vielen Fällen ist es hierbei nachteilig, dass zur präzisen Erfassung des Drehmomentes eine sehr geringe Federkonstante der Torsionsfeder notwendig ist. Torsionsfedern mit einer geringen Federkonstante lassen einen großen Verdrehweg der gegeneinander zu verdrehenden Elemente zu, wodurch ein Antreiben des Fahrzeugs mit Muskelkraft unkomfortabel wird. Ferner kann die Torsionsfeder bei großen Drehmomenten überlastet werden.

Aus dem eingangs genannten Dokument DE 10 2011 120 675 A1 ist es bekannt, einen Drehmomentsensor bereitzustellen, der mit technisch geringem Aufwand ein mit Muskelkraft eingeleitetes Drehmoment präzise erfassen kann. Dies wird dadurch erreicht, dass das Antriebsrad an der Eingangswelle um einen vordefinierten Leerweg verdrehbar ist, wobei zwischen dem Antriebsrad und der Eingangswelle in der Rotationsrichtung ein Anschlag gebildet ist, der den Leerweg und einen Federweg des Federelementes begrenzt.

Dadurch, dass der Federweg des Federelementes durch den Anschlag begrenzt ist, kann ein Drehfederelement mit einer beliebigen Federkonstante verwendet werden, wodurch bei geeigneter Wahl der Federkonstanten die Präzision der Drehmomenterfassungsanordnung erhöht werden kann. Das zu erfassende Drehmoment kann mit einer entsprechenden Empfindlichkeit bestimmt werden. Dadurch, dass der Leerweg durch den Anschlag begrenzt ist, weist die Drehmomenterfassungsanordnung ein übliches Ansprechverhalten auf, da bei einem entsprechend großen Drehmoment nach einer geringen Rotation der Eingangswelle gegenüber dem Antriebsrad das Drehmoment direkt übertragen wird. Ferner ist dadurch eine Überlastung des Drehfederelementes ausgeschlossen. Dadurch, dass im Wesentlichen mechanische Elemente zum Einstellen des Verdrehwinkels verwendet werden, kann die Drehmomenterfassungsanordnung mit technisch einfachen Mitteln realisiert werden. Im Ergebnis können eine Drehmomenterfassungsanordnung und eine entsprechende Getriebeeinheit bereitgestellt werden, die ein Drehmoment mit einfachen Mitteln präzise erfassen kann und die gleichzeitig ein komfortables und übliches Ansprechverhalten aufweist.

Aus dem Dokument DE 699 00 619 T2 ist eine Drehmomenterfassungsanordnung mit zwei Magnetringen bekannt, mittels derer eine Relativverdrehung zwischen einer Eingangswelle und einem Antriebsrad erfassbar ist. Zwischen Eingangswelle und Antriebsrad ist eine Drehfederanordnung vorgesehen.

Auch das Dokument US 6,851,497 B1 offenbart eine Drehmomenterfassungseinrichtung, wobei hierbei ein Axialversatz eines mit einem Zahnkranz versehenen Freilaufrades erfasst wird.

Eine weitere Drehmomenterfassungseinrichtung für ein Fahrrad ist aus dem Dokument WO 2011/074947 A1 bekannt.

Aus dem Dokument DE 10 2011 120 675 A1 sind verschiedene Arten von Drehfederanordnungen bekannt. In einer Ausführungsform weist das Torsionsfederelement einen radialen Außenring und einen radialen Innenring auf, die über radial verlaufende Blattfederelemente miteinander verbunden sind. In einer alternativen Ausführungsform sind ein solcher Außenring und ein solcher Innenring mit Anlageabschnitten ausgestattet, zwischen denen jeweils ein Spiralfederelement angeordnet ist.

Das Dokument DE 695 12 958 T2 offenbart eine Drehmomenterfassungseinrichtung gemäß dem Oberbegriff des Anspruchs 1

Es ist vor dem obigen Hintergrund eine Aufgabe der Erfindung, eine verbesserte Drehmomenterfassungsanordnung für ein mit Muskelkraft angetriebenes Fahrzeug sowie eine entsprechend verbesserte Getriebeeinheit anzugeben.

Die obige Aufgabe wird durch eine Drehmomenterfassungsanordnung nach Anspruch 1 gelöst, wobei die Eingangswelle als Hohlwelle ausgebildet ist, wobei eine Drehfeder der Drehfederanordnung innerhalb der Eingangswelle angeordnet ist.

Vorzugsweise weist die Drehfederanordnung eine Drehstabfeder auf.

Ferner wird die obige Aufgabe gelöst durch eine Getriebeeinheit für ein mit Muskelkraft angetriebenes Fahrzeug, wobei die Getriebeeinheit eine Drehmomenterfassungsanordnung der erfindungsgemäßen Art beinhaltet.

Im Vergleich zu bekannten Drehmomenterfassungsanordnungen kann eine kompakte Bauweise realisiert werden. Durch die Aufnahme der Drehfeder innerhalb der Eingangswelle kann radialer und/oder axialer Bauraum um die Eingangswelle herum eingespart werden. Zudem ist eine Drehfederanordnung, bei der die Verdrehfeder bzw. Torsionsfeder durch eine Drehstabfeder bzw. Torsionsstabfeder gebildet ist, kostengünstig und leicht zu montieren.

Die Eingangswelle ist vorzugsweise an ihren Enden mit Kurbelbefestigungsabschnitten ausgebildet, über die Kurbeln zum muskulären Antrieb der Eingangswelle festgelegt werden können. Die Eingangswelle ist vorzugsweise durchgehend als Hohlwelle ausgebildet. Dabei ist die Eingangswelle in der erfindungsgemäßen Getriebeeinheit eine Kurbelwelle zum Antreiben eines Fahrzeuges, insbesondere eines Fahrrades, mittels Kurbeln, die an der Eingangswelle festgelegt sind. Bei der erfindungsgemäßen Drehmomenterfassungsanordnung ist das Drehglied vorzugsweise ein Antriebsrad, das mit einem angetriebenen Rad in Eingriff steht, insbesondere kämmt, oder eine Hülse, an der wenigstens ein solches Antriebsrad festgelegt ist. Die Getriebeeinheit ist vorzugsweise ein Vorgelegegetriebe mit einer Mehrzahl von Antriebsrädern, die mit jeweiligen angetriebenen Rädern in Eingriff stehen, um eine Mehrzahl von Gangstufen einrichten zu können. Die Getriebeeinheit ist vorzugsweise in einem Tretlagerbereich eines Fahrzeugrahmens angeordnet, so dass sich die Getriebeeinheit insbesondere für eine Mittelmotoranordnung eignet.

Die Drehmomenterfassungsanordnung kann eine Verdrehbegrenzung aufweisen, wie sie im allgemeinen im Dokument DE 10 2011 120 675 A1 beschrieben ist.

Die Verdrehbegrenzung ist vorzugsweise auf einen Bereich zwischen 0,5° und 15° eingestellt, insbesondere auf einen Leerweg bzw. maximalen Verdrehwinkel von 1° bis 10°.

Die Drehstabfeder kann eine Länge aufweisen, die größer ist als 15 mm, insbesondere größer als 20 mm und vorzugsweise größer als 25 mm. Besonders bevorzugt ist es ferner, wenn die axiale Länge der Drehstabfeder kleiner ist als 120 mm. Die Drehstabfeder kann sich dabei von einem Federende zu einem zweiten Federende aus axial durchgängig erstrecken, kann jedoch auch gefaltet sein, so dass die Drehstabfeder einen ersten axialen Abschnitt aufweist, der das erste Federende definiert, sowie einen zweiten, sich axial hiermit überlappenden Abschnitt, an dessen Ende das zweite Federende ausgebildet ist.

Die Verdrehbegrenzung kann beispielsweise zwischen einer Außenverzahnung der Eingangswelle und einer Innenverzahnung des Antriebsrades bzw. einer mit dem Antriebsrad verbundenen Hülse realisiert sein, wie es beispielsweise auch in dem Dokument DE 10 2011 120 675 A1 beschrieben ist. Die Verdrehbegrenzung kann jedoch auch auf beliebige andere Art und Weise realisiert sein, insbesondere durch einen Querstift, der eine Radialöffnung der Eingangswelle durchsetzt, wie es nachstehend noch beschrieben ist.

Die Erfassung des Drehmomentes, das auf die Eingangswelle ausgeübt wird, kann durch Erfassen der Torsion der Drehfeder ermittelt werden, was durch die Verdrehwinkelerfassungsanordnung erfolgt. Ferner kann in vielen Fällen auch automatisch eine Drehzahlerfassung erfolgen, dadurch, dass beispielsweise die Drehzahl von einem Detektorrad erfasst wird, das mit der Eingangswelle oder mit dem Antriebsrad verbunden ist.

Das mit Muskelkraft angetriebene Fahrzeug ist vorzugsweise ein Fahrrad, kann jedoch auch ein Dreirad sein, ein Cart, ein Boot, ein Schienenfahrzeug etc.

Die Aufgabe wird somit vollkommen gelöst.

Gemäß einer bevorzugten Ausführungsform weist die Drehfeder eine Federachse auf, die parallel zu der Eingangswelle ausgelegt ist, insbesondere koaxial zu der Eingangswelle.

Die Drehstabfeder kann generell parallel versetzt zu der Eingangswelle in die Getriebeeinheit integriert werden. Bevorzugt ist jedoch eine Aufnahme der Drehstabfeder koaxial innerhalb der Eingangswelle. Hierbei wird die größtmögliche Bauraumeinsparung realisiert.

Erfindungsgemäß ist die Drehfeder an einem ersten Federende mit der Eingangswelle drehfest verbunden und ist an einem zweiten Federende mit dem Antriebsrad drehfest verbunden. Die Verbindungen können jeweils unmittelbar sein, können jedoch auch mittelbar sein.

Die Drehfeder kann sich dabei in axialer Richtung von dem ersten Federende zu dem zweiten Federende erstrecken, kann jedoch auch gefaltet sein, wie oben angedeutet.

Erfindungsgemäß ist das zweite Federende mit einem Querstift drehfest verbunden, der sich durch eine Radialöffnung in der Eingangswelle hindurch erstreckt und der mit dem Antriebsrad mittelbar oder unmittelbar drehfest verbunden ist.

Die drehfeste Verbindung kann dadurch eingerichtet werden, dass der Querstift in eine Radialnut des zweiten Federendes und in eine Radialnut des Antriebsrades oder einer Antriebsrad-Hülse greift. Die Radialöffnung kann sich dabei zwischen einem ersten axialen Ende und einem zweiten axialen Ende der Eingangswelle befinden, insbesondere zwischen zwei Kurbelbefestigungsabschnitten.

Besonders bevorzugt ist es hierbei, wenn die Radialöffnung in Umfangsrichtung als Langloch ausgebildet ist, so dass der Querstift über einen Leerweg begrenzt verdrehbar in Bezug auf die Eingangswelle ist.

Dieser Leerweg kann gleichzeitig die Verdrehbegrenzung zwischen der Eingangswelle und dem Antriebsrad bilden. Folglich kann der Leerweg sich über einen Winkelbereich von 1° bis 15° erstrecken. In einer anderen Variante wird die Verdrehbegrenzung durch andere Mittel realisiert und das Langloch ermöglicht einen größeren Leerweg. Dies kann dann vorteilhaft sein, wenn das Langloch nicht als Anschlag für den Leerweg verwendet werden soll.

Gemäß einer weiteren insgesamt bevorzugten Ausführungsform liegt der Querstift radial außen an einem Innenumfangsabschnitt des Antriebsrades oder einer Hülse an, mit der das Antriebsrad drehfest verbunden ist.

Der Innenumfangsabschnitt des Antriebsrades oder der Hülse kann beispielsweise durch einen Kopfkreis einer Innenverzahnung gebildet sein.

Durch das Anliegen an dem Innenumfangsabschnitt kann der Querstift in radialer Richtung nach der Art eines radialen Anschlages fixiert werden.

Gemäß einer weiteren insgesamt bevorzugten Ausführungsform ist das Antriebsrad drehfest mit einer Hülse verbunden, die über ein Drehlager, insbesondere ein Gleitlager oder ein Wälzlager, zumindest begrenzt verdrehbar an der Eingangswelle gelagert ist und/oder mit der wenigstens ein zweites Antriebsrad drehfest verbunden ist.

Das Drehlager kann dabei in axialer Richtung unterbrochen sein, so dass sich ein Querstift auch in radialer Richtung durch das Drehlager hindurch erstreckt. Das Drehlager kann jedoch auch auf einer axialen Seite des Querstiftes angeordnet sein.

Das Drehlager dient zur leichten Verdrehung des Antriebsrades in Bezug auf die Eingangswelle innerhalb des Leerweges.

Es versteht sich, dass das Antriebsrad jedoch im Übrigen vorzugsweise als Festrad anzusehen ist, das in Umfangsrichtung nach Vollenden des Leerweges generell drehfest mit der Eingangswelle verbunden ist, so dass Antriebs-Drehmoment von der Eingangswelle direkt auf das Antriebsrad übertragbar ist.

Die Drehfeder ist vorzugsweise eine Stabfeder aus einem Material, das eine elastische Verdrehung eines ersten Federendes gegenüber einem zweiten Federende ermöglicht.

Das Material kann beispielsweise ein Stahl sein, ein Edelstahl, kann jedoch auch ein Verbundwerkstoff sein, beispielsweise ein Kohlefaserverbundwerkstoff. Die Stabfeder kann als massive Stabfeder ausgebildet sein, ist jedoch vorzugsweise als Rohrstabfeder ausgebildet. Die Drehfeder weist, wie oben gesagt, vorzugsweise eine axiale Länge in einem Bereich zwischen 15 mm und 120 mm auf. Die Drehfeder ermöglicht ferner eine elastische Verdrehung zwischen den Federenden in einem Bereich zwischen 0,5° und 15°.

Da der Leerweg vorzugsweise in einem Bereich zwischen 1° und 10° liegt, kann folglich eine plastische Verformung der Drehfeder vermieden werden.

Die Drehfeder kann an dem ersten Federende beispielsweise über eine Welle-Nabe-Verbindung mit einem Innenumfangsabschnitt der Eingangswelle verbunden sein. Hierdurch ist es auf einfache Weise möglich, die Drehstabfeder axial in die Eingangswelle einzuführen. Die Welle-Nabe-Verbindung kann beispielsweise eine Axialverzahnung wie eine Keilnutverzahnung sein. Das zweite Federende der Drehstabfeder liegt dann in der montierten Lage axial ausgerichtet mit der Radialöffnung der Eingangswelle, so dass der Querstift zur Montage radial durch die Eingangswelle und das zweite Federende hindurch geschoben werden kann. Hierdurch kann auch eine Sicherung der Drehstabfeder in axialer Richtung in Bezug auf die Eingangswelle realisiert werden. Auch ist es möglich, eine Hülse, an der eine Mehrzahl von Zahnrädern festgelegt ist, axial in Bezug auf die Eingangswelle zu sichern.

Mit dem Montieren des Antriebsrades bzw. einer Hülse, an der das Antriebsrad festgelegt ist, erfolgt dann eine drehfeste Verbindung zwischen Querstift und dem Antriebsrad. Ferner wird hierdurch eine Verliersicherung bzw. Radialfixierung des Querstiftes realisiert, insbesondere dann, wenn der Querstift an beiden radialen Enden an einem Innenumfangsabschnitt des Antriebsrades bzw. der Antriebsrad-Hülse anliegt.

Generell kann das Material der Stabfeder auch ein Kunststoffmaterial sein, beispielsweise ein elastisch verformbares Gummimaterial. Alternativ ist es auch möglich, die Drehfeder durch eine Schraubenfeder zu bilden.

Ferner ist es insgesamt vorteilhaft, wenn die Verdrehwinkelerfassungsanordnung zwei Detektorräder aufweist, von denen eines drehfest mit der Eingangswelle und von denen das andere drehfest mit dem Antriebsrad verbunden ist.

Die Detektorräder weisen in Umfangsrichtung sich abwechselnde Merkmale auf, die beispielsweise durch Löcher gebildet sein können, jedoch auch durch Magnete gebildet sein können, oder dergleichen.

Bevorzugt sind die Detektorräder als Inkrementalgeberräder ausgebildet, die in Umfangsrichtung eine Vielzahl von sich abwechselnden Merkmalen aufweisen, so dass eine relative Verdrehwinkelerfassung der jeweiligen Detektorräder auf einfache Weise realisierbar ist. Ein Absolutwert der relativen Verdrehung kann dann beispielsweise durch eine Differenz der Verdrehwinkel der Detektorräder gebildet werden.

Die relative Verdrehung der Detektorräder entspricht einer Verspannung der Drehstabfeder in Torsionsrichtung. Die relative Verdrehung lässt sich folglich in ein Drehmoment umrechnen, das auf die Eingangswelle ausgeübt wird. Wenn keine relative Verdrehung vorliegt, entspricht dies einem Drehmomentwert von 0. Das maximal erfassbare Drehmoment entspricht der maximalen Auslenkung des Querstiftes innerhalb des Leerweges, insbesondere innerhalb eines Langloches, beispielsweise in der Eingangswelle, an der Zahnräder festgelegt sind.

Die Detektorräder können, sofern sie als Inkrementalgeberräder ausgebildet sind, mit der gleichen Anzahl von Inkrementen/Polen ausgestattet sein. In einer bevorzugten Variante ist die Anzahl der Inkremente bzw. Pole (die sich in Umfangsrichtung abwechselnden Merkmale) unterschiedlich groß. Hierbei kann bei einer Relativverdrehung ggf. aufgrund der Phasenverschiebung auf eine absolute Relativposition geschlossen werden, so dass ggf. nicht nur die relative Verdrehung, sondern auch die absolute Drehlage der Eingangswelle und folglich der Kurbeln erfasst werden.

In manchen Fällen können Sensoren zum Erfassen der sich abwechselnden Merkmale so ausgebildet sein, dass nicht nur eine relative Verdrehung erfassbar ist, sondern auch eine Erfassung der Drehrichtung.

Vorzugsweise können mit zwei Detektorrädern folgende Parameter bzw. Zustandsgrößen der Drehmomenterfassungsanordnung bzw. der Getriebeeinheit erfasst werden: von der Eingangswelle auf das Drehglied übertragenes Drehmoment, Drehzahl der Eingangswelle und/oder des Drehgliedes, Drehrichtung der Eingangswelle und/oder des Drehgliedes, sowie absolute Drehlage der Eingangswelle und/oder des Drehgliedes.

Bevorzugt weist die Verdrehwinkelerfassungsanordnung wenigstens einen Hall-Sensor auf, insbesondere wenigstens einen vorgespannten Hall-Sensor.

Durch einen Hall-Sensor lassen sich alternierende Magnetfelder erkennen bzw. erfassen. Wenigstens eines der Detektorräder weist folglich in Umfangsrichtung alternierende Magnetfelder auf, die beispielsweise durch eine Mehrzahl von in Umfangsrichtung versetzt angeordneten Magneten gebildet sein können.

Bei Verwendung eines vorgespannten Hall-Sensors erzeugt der Hall-Sensor selbst ein Magnetfeld, das durch in Umfangsrichtung veränderliche Formen, wie beispielsweise Zähne eines Antriebsrades, verändert wird, wobei die Veränderung von einem derartigen vorgespannten Hall-Sensor erfassbar ist.

Bei dieser Ausführungsform müssen die Detektorräder folglich nicht als separate Räder ausgebildet sein, sondern können beispielsweise durch das Antriebsrad selbst bzw. einen Umfangsabschnitt der Eingangswelle oder eines hiermit ohnehin verbundenen Bauteils gebildet sein.

Der wenigstens eine Hall-Sensor ist vorzugsweise gehäusefest, d.h. fest in Bezug auf ein Gehäuse der Drehmomenterfassungsanordnung bzw. einer Getriebeeinheit festgelegt, in der eine solche Drehmomenterfassungsanordnung eingebaut ist. Es ist folglich nicht notwendig, die Detektorräder mit Elektronik zu verbinden. Bevorzugt weist die Drehmomenterfassungsanordnung folglich keine rotierende Elektronik auf.

Bei der erfindungsgemäßen Getriebeeinheit ist es bevorzugt, wenn ein elektrischer Antrieb mit einer Welle der Getriebeeinheit verbindbar ist, wobei dem elektrischen Antrieb eine Steuereinheit zugeordnet ist, die dazu ausgebildet ist, den elektrischen Antrieb auf der Grundlage der erfassten Verdrehung anzusteuern, um ein entsprechendes Drehmoment in die Getriebeeinheit einzukoppeln.

Hierdurch kann präzise und individuell ein zusätzliches Antriebsmoment zum Antreiben des Fahrzeugs bereitgestellt werden, wodurch das Fahren mit dem Fahrzeug besonderes komfortabel wird.

Es ist weiterhin bevorzugt, wenn die Eingangswelle der Drehmomenterfassungsanordnung als Durchgangswelle ausgebildet ist und an ihren Enden mit Kurbeln zum Antreiben der Eingangswelle verbindbar ist. Ein Drehmoment, das mittels der Kurbeln bereitgestellt wird, kann direkt erfasst werden, wodurch eine Umrechnung eines Übersetzungsverhältnisses entfallen kann.

Ferner ist es bevorzugt, wenn das angetriebene Rad an einer Vorgelegewelle der Getriebeeinheit gelagert ist und mit dem Antriebsrad ein schaltbares Radpaar bildet. Auf diese Weise lässt sich mit einfachen Mitteln ein Stirnradgetriebe bilden.

Vorzugsweise weist die Getriebeeinheit eine Mehrzahl von Gangstufen auf, die durch eine Mehrzahl von derartigen Radsätzen gebildet sind. Die Getriebeeinheit kann als eine Getriebegruppe mit einer Mehrzahl von solchen Radsätzen ausgebildet sein, kann jedoch auch durch zwei hintereinander geschaltete Getriebegruppen gebildet sein, um auf diese Weise die Anzahl der Gangstufen entsprechend erhöhen zu können, wie es beispielsweise auch in dem Dokument DE 10 2011 1210 675 A1 beschrieben ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine Seitenansicht eines Fahrradrahmens mit einem Mehrganggetriebe und einem elektrischen Antrieb;
- Figur 2: in schematischer Darstellung einen Schaltplan einer Drehmomenterfassungsanordnung in einem Mehrganggetriebe;
- Figur 3: eine Längsschnittansicht durch eine Drehmomenterfassungsanordnung und einen Ausschnitt eines Wechselgetriebes;
- Figur 3a: eine Modifikation der Drehmomenterfassungsanordnung der Fig. 3;
- Figur 4: eine perspektivische Ansicht der Drehmomenterfassungsanordnung der Fig. 4; und
- Figur 5: eine Querschnittsansicht entlang der Linie V-V der Fig. 3.

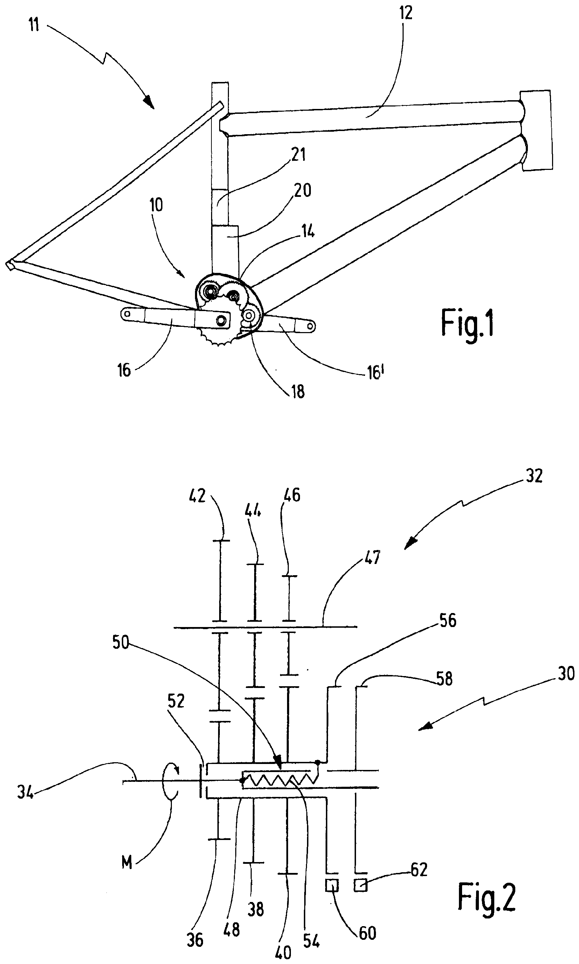

In Fig. 1 ist eine Getriebeeinheit für ein mit Muskelkraft angetriebenes Fahrzeug 11 gezeigt und allgemein mit 10 bezeichnet. Das Fahrzeug 11 kann insbesondere ein Fahrrad sein.

Fig. 1 zeigt eine Seitenansicht eines Fahrradrahmens 12, der ein Getriebegehäuse 14 aufweist, innerhalb dessen die Getriebeeinheit 10 aufgenommen ist. Die Getriebeeinheit 10 ist in dieser Darstellung schematisch angedeutet und ist als kompakte Einheit ausgebildet. Die Getriebeeinheit 10 wird hierbei beispielsweise für den Einsatz bei einem Zweirad beschrieben, wobei allerdings auch der Einsatz bei anderen mit Muskelkraft angetriebenen Fahrzeugen möglich ist.

Die Getriebeeinheit 10 ist als Vorgelegegetriebe ausgebildet und ist zur Einrichtung einer Mehrzahl von Gangstufen ausgebildet, insbesondere zur Einrichtung von wenigstens sechs Vorwärtsgangstufen, insbesondere wenigstens neun Vorwärtsgangstufen, und vorzugsweise weniger als 27 Vorwärtsgangstufen.

Die Getriebeeinheit 10 und das Getriebegehäuse 14 bilden zusammen mit Tretkurbeln 16, 16' ein Mehrganggetriebe 18. Das Fahrrad 12 weist ferner einen elektrischen Antrieb 20 auf, der mit dem Mehrganggetriebe 18 verbunden ist, um das Fahrzeug, zusätzlich zu dem Antrieb über die Tretkurbeln 16, 16', anzutreiben. Der elektrische Antrieb 20 ist mit einer elektrischen Energiequelle 21 verbunden, die den elektrischen Antrieb 20 mit elektrischer Energie versorgt. Die Energiequelle 21 ist vorzugsweise als Akkumulator 21 ausgebildet.

Eine Drehachse des elektrischen Antriebs 20 kann beispielsweise quer zu einer Achse einer Kurbelwelle des Fahrrades 11 ausgerichtet sein. Antriebskraft des elektrischen Antriebs 20 kann dann beispielsweise über einen Winkeltrieb in das Mehrganggetriebe 18 eingekoppelt werden.

In Fig. 2 ist eine Drehmomenterfassungsanordnung schematisch dargestellt und allgemein mit 30 bezeichnet. Die Drehmomenterfassungsanordnung 30 ist in der Darstellung von Fig. 2 als Teil eines Wechselgetriebes 32 gebildet, das beispielsweise Bestandteil eines Mehrganggetriebes sein kann, wie es in Fig. 1 bei 18 gezeigt ist.

Die Drehmomenterfassungsanordnung 30 weist eine Eingangswelle 34 auf, über die ein zu messendes Drehmoment M übertragbar ist. Die Eingangswelle 34 ist entlang einer Längsachse 34 ausgerichtet, die koaxial zu einer Kurbelwellenachse des Fahrrades 11 ausgerichtet sein kann.

An der Eingangswelle 34 sind Antriebsräder 36, 38, 40 gelagert, die drehfest miteinander verbunden sind. Die Antriebsräder 36, 38, 40 kämmen mit angetriebenen Rädern 42, 44, 46 und bilden jeweils Radpaare hiermit. Die angetriebenen Räder 42, 44, 46 sind an einer Vorgelegewelle 48 drehbar gelagert. Die Antriebsräder 36, 38, 40 und die angetriebenen Räder 42, 44, 46 bilden zusammen das Wechselgetriebe 32.

In einer alternativen Ausführungsform kann die Drehmomenterfassungsanordnung 30 auch lediglich einem Antriebsrad 36 zugeordnet sein, das mit einem angetriebenen Rad 42 verbunden oder verbindbar ist, um ein Drehmoment M von der Eingangswelle 34 zu übertragen.

Die Antriebsräder 36, 38, 40 sind drehfest über eine gemeinsame Hülse 48 miteinander verbunden. Ferner sind die Antriebsräder 36, 38, 40 über eine Drehfederanordnung 50 in Rotationsrichtung elastisch federnd mit der Eingangswelle 34 verbunden. Die Antriebsräder 36 38, 40 sind ferner mittels einer Drehwinkelbegrenzung 52 an der Eingangswelle 34 gelagert. Die Drehwinkelbegrenzung 52 kann beispielsweise zwischen der Hülse 48 und der Eingangswelle 34 wirken. Die Drehwinkelbegrenzung 52 weist in der Rotationsrichtung zwischen der Eingangswelle 34 und den Antriebsrädern 36, 38, 40 einen Leerweg auf, um den die Eingangswelle 34 relativ zu den Antriebsrädern 36, 38, 40 verdrehbar gelagert ist. Der Drehwinkel, um den die Eingangswelle 34 relativ zu den Antriebsrädern verdrehbar gelagert ist, ist durch den Leerweg begrenzt, und kann beispielsweise in einem Bereich von 1° bis 15° liegen, vorzugsweise in einem Bereich von 1° bis 10°.

Die Drehmomenterfassungsanordnung 30 weist ferner eine Drehfeder 54 auf, die entlang einer Achse der Eingangswelle 34 ausgerichtet ist und die innerhalb der Eingangswelle 34 angeordnet ist, und zwar innerhalb eines Hohlwellenabschnittes der Eingangswelle 34.

Die Eingangswelle 34 kann als durchgehende Hohlwelle ausgebildet sein, kann jedoch auch einen Vollwellenabschnitt und einen Hohlwellenabschnitt beinhalten, wie es in Fig. 2 dargestellt ist.

Die Drehmomenterfassungsanordnung 30 weist ferner eine Verdrehwinkelerfassungsanordnung auf. Die Verdrehwinkelerfassungsanordnung beinhaltet ein erstes Detektorrad 56, das mit den Antriebsrädern 36, 38, 40 drehfest verbunden ist. Die Verdrehwinkelerfassungsanordnung weist ferner ein zweites Detektorrad 58 auf, das verdrehfest mit der Eingangswelle 34 verbunden ist. Die Detektorräder 56, 58 weisen in einer Variante einen identischen Durchmesser auf und sind axial nebeneinander angeordnet. Dem ersten Detektorrad 56 ist ein erster Drehwinkelsensor 60 zugeordnet. Dem zweiten Detektorrad 58 ist ein zweiter Drehwinkelsensor 62 zugeordnet.

Durch die Drehwinkelbegrenzung 52 ist die Eingangswelle 34 relativ zu den Antriebsrädern 36, 38, 40 um den vordefinierten Drehwinkel verdrehbar gelagert, wobei der vordefinierte Verdrehwinkel durch den Leerweg der Drehwinkelbegrenzung 52 gebildet ist. Wenn das zu messende Drehmoment M über die Eingangswelle 34 übertragen wird, kann die Eingangswelle 34 um den Leerweg relativ zu den Antriebsrädern, 36, 38, 40 verdreht werden, wodurch die Drehfeder 54 der Drehfederanordnung 50 gespannt bzw. elastisch verdreht wird. Je nach Größe des eingeleiteten Drehmomentes stellt sich der Verdrehwinkel in Abhängigkeit einer Federkonstante der Drehfeder 54 ein. Der Verdrehwinkel kann durch die Drehwinkelsensoren 60, 62 der Verdrehwinkelerfassungsanordnung erfasst werden und ist vorzugsweise proportional zu dem eingeleiteten Drehmoment M.

Sofern das Drehmoment M einen vorbestimmten Wert überschreitet, so dass der Verdrehwinkel den durch den Leerweg vordefinierten Verdrehwinkel überschreitet, schlägt die Eingangswelle 34 an einem Anschlag der Verdrehbegrenzung an, der den Leerweg begrenzt. Hierbei wird das eingeleitete Drehmoment M dann direkt auf die Antriebsräder 36, 38, 40 übertragen.

Durch die Drehwinkelbegrenzung 52 bzw. den Leerweg kann das Torsionsfederelement 50 ferner derart vorgespannt werden, dass das Torsionsfederelement 50 in einem unbelasteten Zustand, also wenn das eingeleitete Drehmoment M gleich Null ist oder einen vorbestimmten Wert überschreitet, zunächst nicht weiter belastet wird. Erst wenn das Drehmoment M den vorbestimmten Wert überschreitet, wird die Drehfeder 50 durch das Drehmoment M belastet, bis das Drehmoment M einen weiteren vorbestimmten Wert erreicht, so dass die Eingangswelle 34 an dem Anschlag anschlägt. Hierdurch kann ein bestimmter Drehmomentbereich definiert werden, innerhalb dessen das Drehmoment M von der Drehmomenterfassungsanordnung 30 erfasst werden soll.

Dadurch, dass der Verdrehwinkel durch die Verdrehbegrenzung 52 begrenzt ist, kann die Federkonstante der Drehfeder 50 sehr klein gewählt werden. Hierdurch kann die Empfindlichkeit der Drehmomenterfassungsanordnung 30 erhöht werden. Ferner kann mit technisch einfachen Mitteln eine präzise und empfindliche Drehmomenterfassungsanordnung 30 bereitgestellt werden, die durch die Drehwinkelbegrenzung 52 ein normales und akzeptables Ansprechverhalten zeigt.

Es versteht sich, dass die Anwendung der Drehmomenterfassungsanordnung 30, die in Fig. 2 mit dem Wechselgetriebe 32 dargestellt ist, lediglich beispielhaft ist. Alternativ hierzu kann die Drehmomenterfassungsanordnung 30 auch mit einem einzelnen Antriebsrad verbunden sein, das mit einem einzelnen angetriebenen Rad verbunden oder verbindbar ist, wobei das angetriebene Rad auch koaxial zu dem Antriebsrad angeordnet sein kann.

In einer weiteren Ausführungsform kann das einzelne Antriebsrad auch Teil eines Planetengetriebes sein oder mit einem Planetengetriebe verbunden oder verbindbar sein. Dabei kann das einzelne Antriebsrad drehfest verbunden oder verbindbar sein mit einem Sonnenrad, einem Planetenträger oder einem Hohlrad eines derartigen Planetengetriebes.

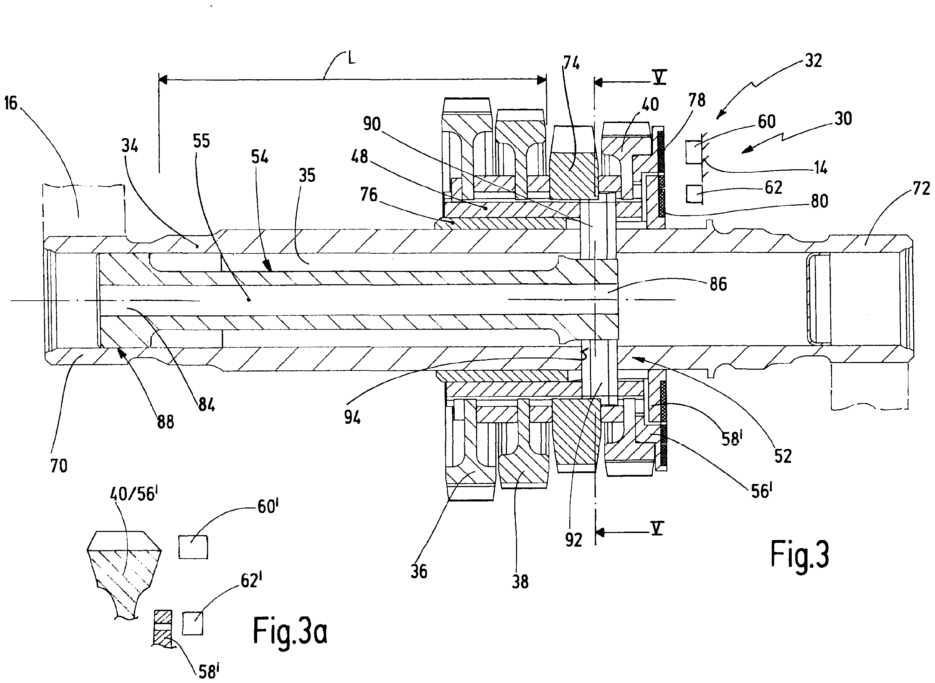

Eine bevorzugte Ausführungsform einer Drehmomenterfassungsanordnung 30 ist in den Fig. 3 bis 5 dargestellt. Die Ausführungsform der Drehmomenterfassungsanordnung 30 in Fig. 3 bis 5 entspricht hinsichtlich Aufbau und Funktionsweise generell der Drehmomenterfassungsanordnung 30 der Fig. 2. Gleiche Elemente sind daher durch gleiche Bezugszeichen dargestellt. Im Folgenden werden im Wesentlichen die Unterschiede erläutert.

Die Eingangswelle 34 weist bei der Drehmomenterfassungsanordnung 30 der Fig. 3 bis 5 an einem ersten axialen Ende einen ersten Kurbelbefestigungsabschnitt 70 und an einem zweiten axialen Ende einen zweiten Kurbelbefestigungsabschnitt 72 auf, an denen jeweilige Kurbeln 16, 16' befestigbar sind.

Ferner ist an der Hülse 48 axial zwischen dem Antriebsrad 38 und dem Antriebsrad 40 ein weiteres Antriebsrad 74 festgelegt.

Die Hülse 48 ist mittels eines Drehlagers 76 mit geringer Reibung in Bezug auf die Eingangswelle 34 verdrehbar gelagert. Das Drehlager 76 kann beispielsweise ein Gleitlager sein, kann jedoch auch ein Wälzlager sein.

Das erste Detektorrad 56' ist mit der Hülse 48 verbunden und ist radial außerhalb des zweiten Detektorrades 58' angeordnet, das am Außenumfang der Eingangswelle 34 festgelegt ist. An den Detektorrädern 56', 58' können jeweilige Polscheiben 78, 80 festgelegt sein, die in der Ausführungsform der Fig. 3 axial miteinander ausgerichtet sind. Die Polscheiben 78, 80 sind vorzugsweise magnetische Polscheiben, die über zumindest einen Umfangsabschnitt ein magnetisches Wechselfeld ausbilden. Das magnetische Wechselfeld ist bei der Ausführungsform der Fig. 3 vorzugsweise in axialer Richtung ausgerichtet und mittels jeweiliger Drehwinkelsensoren 60, 62 erfassbar, die axial benachbart zu den jeweiligen Polscheiben 78, 80 angeordnet sind.

Fig. 3a zeigt eine alternative Ausführungsform, bei der die Drehwinkelsensoren 60', 62' durch vorgespannte Hall-Sensoren ausgebildet sind. In diesem Fall kann das erste Detektorrad 56' durch ein Antriebsrad 40 gebildet sein bzw. durch dessen Verzahnung. Im Falle des zweiten Detektorrades 58' kann dieses beispielsweise ein Rad sein, das mit einer Mehrzahl von in Umfangsrichtung verteilt angeordneten Löchern ausgebildet ist oder dergleichen, also mechanische Merkmale, die dazu geeignet sind, ein von dem vorgespannten Hall-Sensor 62' bereitgestelltes Magnetfeld zu stören, so dass ein Verdrehwinkel mittels des vorgespannten Hall-Sensors 62' erfassbar ist.

Die Drehfeder 54 ist, wie es insbesondere in Fig. 3 zu erkennen ist, als hohle Drehstabfeder ausgebildet. Die Drehstabfeder 54 weist eine axiale Durchgangsöffnung 55 auf. Die Drehstabfeder 54 weist ein erstes Federende 84 auf, das benachbart ist zu und/oder sich vorzugsweise in axialer Richtung überschneidet mit dem ersten Kurbelbefestigungsabschnitt 70. Ferner weist die Drehstabfeder 54 ein zweites Federende 86 auf, das vorzugsweise axial ausgerichtet ist mit dem Wechselgetriebe 32.

Das erste Federende 84 weist einen größeren Außendurchmesser auf als das zweite Federende 86. Das erste Federende 84 ist mit einer in Fig. 3 nicht näher bezeichneten Außenverzahnung versehen, die in eine nicht näher bezeichnete Innenverzahnung der Eingangswelle 34 greift, so dass das erste Federende 84 und die Eingangswelle 34 in Umfangsrichtung über eine Welle-Nabe-Verbindung 88 miteinander verbunden sind.

Das zweite Federende 86, das von dem ersten Federende 84 um eine Distanz L beabstandet ist, weist eine radiale Durchgangsöffnung auf, durch die sich ein Querstift 90 hindurch erstreckt. Die Länge L ist vorzugsweise größer als 15 mm, insbesondere größer als 20 mm, und ist vorzugsweise kleiner als 120 mm.

Der Querstift 90 weist eine größere Länge auf als der Außendurchmesser der Eingangswelle 34. Radial überstehende Enden 92 des Querstiftes 90 können an radial gegenüberliegenden Innenumfangsabschnitten des Antriebsrades 74 anliegen, insbesondere zum Zwecke einer Verliersicherung. Der Querstift 90 ist in Umfangsrichtung formschlüssig in eine Radialöffnung der Hülse 48 eingesteckt.

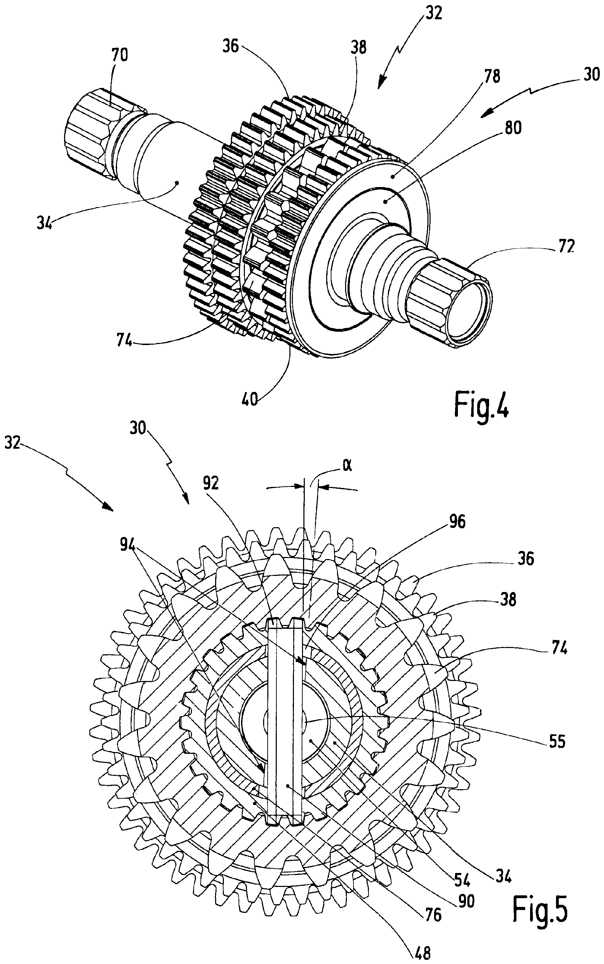

Der Querstift 90 erstreckt sich in radialer Richtung durch Radialöffnungen 94 in der Eingangswelle 34 hindurch, die in Umfangsrichtung jeweils als Langloch ausgebildet sind, wie es in Fig. 5 zu erkennen ist. In Umfangsrichtung weisen die Radialöffnungen 94 eine solche Länge bzw. einen solchen Winkel auf, dass der Querstift 90 und folglich die Antriebsräder 36, 38, 40, 74 um einen Winkel α in Bezug auf die Eingangswelle 34 verdreht werden können, der im folgenden Winkelbereich liegt: 1° bis 15°, vorzugsweise 2° bis 8°.

Das Drehlager 76 weist eine Radialöffnung 96 auf, die von dem Querstift 90 durchsetzt ist und die sich über einen größeren Winkel erstreckt als der Winkel α.

Die Drehstabfeder 54 ist einstückig aus einem Stahl hergestellt. Ein Außendurchmesser des zweiten Federendes 86 ist größer als ein Außendurchmesser des Zwischenstückes zwischen den Federenden 84, 86 und kleiner als ein Innendurchmesser einer Durchgangsbohrung der Eingangswelle 34. Demzufolge lässt sich die Drehstabfeder 54 auf einfache Art und Weise an der Eingangswelle 34 montieren, indem die Drehstabfeder 54 mit dem zweiten Federende 86 vorweg in die Durchgangsöffnung der Eingangswelle 34 eingeschoben wird.

Schließlich greift eine Außenverzahnung des ersten Federendes 84 in eine Innenverzahnung der Eingangswelle 34, und die Drehstabfeder 54 kann weiter axial eingeschoben werden, bis das zweite Federende 86 mit den Radialöffnungen 94 ausgerichtet ist, um dann den Querstift 90 einschieben zu können. Anschließend kann das Wechselgetriebe 32 fertig montiert werden. Das Antriebsrad 74 bildet dabei eine Verliersicherung bzw. Radialfixierung für den Querstift 90.

## Patentansprüche

1. Drehmomenterfassungsanordnung (30) für ein mit Muskelkraft angetriebenes Fahrzeug (11), mit:
- einer Eingangswelle (34), über die ein zu erfassendes Drehmoment (M) zum Antreiben des Fahrzeugs (11) übertragbar ist,
- wenigstens einem Drehglied (36, 38, 40, 74), das an der Eingangswelle (34) gelagert ist und das zum Übertragen des Drehmomentes (M) ausgebildet ist,
- einer Drehfederanordnung (50), wobei die Eingangswelle (34) und das Drehglied (36, 38, 40, 74) über die Drehfederanordnung (50) in Rotationsrichtung federnd verbunden sind, und
- einer Verdrehwinkelerfassungsanordnung (60, 62), die dazu ausgebildet ist, eine Verdrehung des Drehgliedes (36, 38, 40, 74) gegenüber der Eingangswelle (34) zu erfassen,
wobei die Eingangswelle (34) als Hohlwelle ausgebildet ist, wobei eine Drehfeder (54) der Drehfederanordnung (50) innerhalb der Eingangswelle (34) angeordnet ist,
wobei die Drehfeder (54) an einem ersten Federende (84) mit der Eingangswelle (34) drehfest verbunden ist und an einem zweiten Federende (86) mit dem Drehglied (36, 38, 40, 74) drehfest verbunden ist
**dadurch gekennzeichnet, dass** das zweite Federende (86) mit einem Querstift (90) drehfest verbunden ist, der sich durch eine Radialöffnung (94) in der Eingangswelle (34) hindurch erstreckt und der mit dem Drehglied (36, 38, 40, 74) drehfest verbunden ist.

2. Drehmomenterfassungsanordnung nach Anspruch 1, wobei die Drehfederanordnung (50) eine Drehstabfeder (54) aufweist.

3. Drehmomenterfassungsanordnung nach Anspruch 1 oder 2, **dadurch gekennzeichnet, dass** die Drehfeder (54) eine Federachse (35) aufweist, die parallel zu der Eingangswelle (34) ausgerichtet ist.

4. Drehmomenterfassungsanordnung nach einem der Ansprüche 1 bis 3, **dadurch gekennzeichnet, dass** die Radialöffnung (94) in Umfangsrichtung als Langloch ausgebildet ist, so dass der Querstift (90) über einen Leerweg (α) begrenzt verdrehbar in Bezug auf die Eingangswelle (34) ist.

5. Drehmomenterfassungsanordnung nach einem der Ansprüche 1 bis 46, **dadurch gekennzeichnet, dass** der Querstift (90) radial außen an einem Innenumfangsabschnitt des Drehgliedes (36, 38, 40, 74) oder einer Hülse (48) anliegt, mit der das Drehglied (36, 38, 40, 74) drehfest verbunden ist.

6. Drehmomenterfassungsanordnung nach einem der Ansprüche 1 bis 5, **dadurch gekennzeichnet, dass** das Drehglied (36, 38, 40, 74) drehfest mit einer Hülse (48) verbunden ist, die über ein Drehlager (76) zumindest begrenzt verdrehbar an der Eingangswelle (34) gelagert ist und/oder mit der wenigstens ein zweites Drehglied drehfest verbunden ist.

7. Drehmomenterfassungsanordnung nach einem der Ansprüche 1 bis 6, **dadurch gekennzeichnet, dass** die Drehfeder eine Stabfeder (54) aus einem Material ist, das eine elastische Verdrehung eines ersten Federendes (84) gegenüber einem zweiten Federende (86) ermöglicht.

8. Drehmomenterfassungsanordnung nach einem der Ansprüche 1 bis 7, **dadurch gekennzeichnet, dass** die Verdrehwinkelerfassungsanordnung (60, 62) einen Hall-Sensor (60, 62), insbesondere einen vorgespannten Hall-Sensor (60', 62'), aufweist.

9. Drehmomenterfassungsanordnung nach einem der Ansprüche 1 bis 8, **dadurch gekennzeichnet, dass** die Eingangswelle ist durchgehend als Hohlwelle ausgebildet ist.

10. Getriebeeinheit (10) für ein mit Muskelkraft angetriebenes Fahrzeug (11), wobei die Getriebeeinheit (10) eine Drehmomenterfassungsanordnung (50) nach einem der Ansprüche 1 bis 9 aufweist.

## Claims

1. Torque detection arrangement (30) for a muscle-powered vehicle vehicle (11), comprising:
- an input shaft (34) via which a torque (M) to be detected can be transmitted for driving the vehicle (11),
- at least one rotary member (36, 38, 40, 74) which is mounted on the input shaft (34) and which is designed for transmitting the torque (M),
- a torsion spring arrangement (50), wherein the input shaft (34) and the rotary member (36, 38, 40, 74) are resiliently connected via the torsion spring arrangement (50) in a direction of rotation, and
- a torsion angle detection arrangement (60, 62) which is designed to detect a rotation of the rotary member (36, 38, 40, 74) relative to the input shaft (34),
wherein the input shaft (34) is formed as a hollow shaft, wherein a torsion spring (54) of the torsion spring arrangement (50) is arranged within the input shaft (34),
wherein the torsion spring (54) is connected at a first spring end (84) with the input shaft (34) in a rotationally fixed manner and is connected at a second spring end (86) with the rotary member (36, 38, 40) in a rotationally fixed manner,
**characterized in that** the second spring end (86) is connected in a rotationally fixed manner with a transverse pin (90) which extends through a radial opening (94) in the input shaft and which is connected in a rotationally fixed manner with the rotary member (36, 38, 40, 74).

2. Torque detection arrangement according to claim 1, wherein the torsion spring arrangement (50) comprises a torsion bar spring (54).

3. Torque detection arrangement according to claim 1 or 2, **characterized in that** the torsion spring (54) has a spring axis (35) which is aligned parallel to the input shaft (34).

4. Torque detection arrangement according to any one of claims 1 to 3, **characterized in that** the radial opening (94) is formed as an oblong hole in the circumferential direction so that the transverse pin (90) is limitedly rotatable over an idle travel (a) with respect to the input shaft (34).

5. Torque detection arrangement according to any one of claims 1 to 4, **characterized in that** the transverse pin (90) abuts radially outwardly at an inner circumferential section of rotary member (36, 38, 40, 74) or at a sleeve (48) with which the rotary member (36, 38, 40, 74) is connected in a rotationally fixed manner.

6. Torque detection arrangement according to any one of claims 1 to 5, **characterized in that** the rotary member (36, 38, 40, 74) is connected in a rotationally fixed manner to a sleeve (48) which is mounted on the input shaft (34) via a rotational bearing (76) so as to be rotatable at least to a limited extent and/or to which at least a second rotary member is is connected in a rotationally fixed manner.

7. Torque detection arrangement according to any one of claims 1 to 6, **characterized in that** the torsion spring is a bar spring (54) made of a material which allows an elastic torsion of a first spring end (84) with respect to a second spring end (86).

8. Torque detection arrangement according to any one of claims 1 to 7, **characterized in that** the torsion angle detection arrangement (60, 62) comprises a Hall-sensor (60, 62), in particular a biased Hall sensor (60', 62').

9. Torque detection arrangement according to any one of the claims 1 to 8, **characterized in that** the input shaft is designed as a hollow shaft throughout.

10. Transmission unit (10) for a vehicle (11) driven by muscle power, wherein the transmission unit (10) comprises a torque detection arrangement (30) according to any one of claims 1 to 9.

## Revendications

1. Agencement de détection de couple (30) pour un véhicule (11) entraîné par la force musculaire, comprenant :
- un arbre d'entrée (34), par l'intermédiaire duquel un couple (M) à détecter peut être transmis pour entraîner le véhicule (11),
- au moins un élément rotatif (36, 38, 40, 74) qui est monté sur l'arbre d'entrée (34) et qui est configuré pour transmettre le couple (M),
- un agencement de ressort de torsion (50), l'arbre d'entrée (34) et l'élément rotatif (36, 38, 40, 74) étant reliés de manière élastique dans la direction de rotation par l'intermédiaire de l'agencement de ressort de torsion (50), et
- un agencement de détection d'angle de torsion (60, 62) qui est configuré pour détecter une torsion de l'élément rotatif (36, 38, 40, 74) par rapport à l'arbre d'entrée (34), l'arbre d'entrée (34) étant configuré sous forme d'arbre creux, un ressort de torsion (54) de l'agencement de ressort de torsion (50) étant agencé à l'intérieur de l'arbre d'entrée (34),
le ressort de torsion (54) étant relié de manière solidaire en rotation à l'arbre d'entrée (34) à une première extrémité de ressort (84) et étant relié de manière solidaire en rotation à l'élément rotatif (36, 38, 40, 74) à une deuxième extrémité de ressort (86),
**caractérisé en ce que** la deuxième extrémité de ressort (86) est reliée de manière solidaire en rotation à une broche transversale (90) qui s'étend à travers une ouverture radiale (94) dans l'arbre d'entrée (34) et qui est reliée de manière solidaire en rotation à l'élément rotatif (36, 38, 40, 74).

2. Agencement de détection de couple selon la revendication 1, dans lequel l'agencement de ressort de torsion (50) présente un ressort à barre de torsion (54).

3. Agencement de détection de couple selon la revendication 1 ou 2, **caractérisé en ce que** le ressort de torsion (54) présente un axe de ressort (35) qui est orienté parallèlement à l'arbre d'entrée (34).

4. Agencement de détection de couple selon l'une quelconque des revendications 1 à 3, **caractérisé en ce que** l'ouverture radiale (94) est réalisée sous la forme d'un trou oblong dans la direction circonférentielle, de telle sorte que la broche transversale (90) peut tourner de manière limitée par rapport à l'arbre d'entrée (34) sur une course à vide (a).

5. Agencement de détection de couple selon l'une quelconque des revendications 1 à 46, **caractérisé en ce que** la broche transversale (90) est en appui radialement vers l'extérieur sur une section circonférentielle intérieure de l'élément rotatif (36, 38, 40, 74) ou sur un manchon (48) auquel l'élément rotatif (36, 38, 40, 74) est relié de manière solidaire en rotation.

6. Agencement de détection de couple selon l'une quelconque des revendications 1 à 5, **caractérisé en ce que** l'élément rotatif (36, 38, 40, 74) est relié de manière solidaire en rotation à un manchon (48) qui est monté sur l'arbre d'entrée (34) de manière à pouvoir tourner au moins de manière limitée par l'intermédiaire d'un palier de rotation (76) et/ou auquel est relié de manière solidaire en rotation au moins un deuxième élément rotatif.

7. Agencement de détection de couple selon l'une quelconque des revendications 1 à 6, **caractérisé en ce que** le ressort de torsion est un ressort à barre (54) en un matériau qui permet une torsion élastique d'une première extrémité de ressort (84) par rapport à une deuxième extrémité de ressort (86).

8. Agencement de détection de couple selon l'une quelconque des revendications 1 à 7, **caractérisé en ce que** l'agencement de détection d'angle de torsion (60, 62) présente un capteur à effet Hall (60, 62), notamment un capteur à effet Hall précontraint (60', 62').

9. Agencement de détection de couple selon l'une quelconque des revendications 1 à 8, **caractérisé en ce que** l'arbre d'entrée est configuré de manière continue sous forme d'arbre creux.

10. Unité de transmission (10) pour un véhicule entraîné par la force musculaire (11), l'unité de transmission (10) présentant un agencement de détection de couple (50) selon l'une quelconque des revendications 1 à 9.
